(19) **Europäisches Patentamt / European Patent Office / Office européen des brevets**

(11) **EP 3 234 211 B1**

(12) **EUROPEAN PATENT SPECIFICATION**

(45) Date of publication and mention
of the grant of the patent:
**03.06.2020 Bulletin 2020/23**

(21) Application number: **15820048.5**

(22) Date of filing: **16.12.2015**

(51) Int Cl.:
*C21D 9/40* *(2006.01)*     *C23C 8/26* *(2006.01)*
*F16G 5/16* *(2006.01)*     *C22C 38/08* *(2006.01)*
*C22C 38/18* *(2006.01)*     *C22C 38/40* *(2006.01)*
*C22C 38/44* *(2006.01)*     *C22C 38/52* *(2006.01)*

(86) International application number:
**PCT/EP2015/025106**

(87) International publication number:
**WO 2016/096156 (23.06.2016 Gazette 2016/25)**

(54) **METHOD FOR PRODUCING A FLEXIBLE STEEL RING FOR A DRIVE BELT FOR A CONTINUOUSLY VARIABLE TRANSMISSION**

VERFAHREN ZUR HERSTELLUNG EINES FLEXIBLEN STAHLRINGS FÜR EINEN ANTRIEBSRIEMEN FÜR EIN STUFENLOSES GETRIEBE

PROCÉDÉ DE FABRICATION D'UNE BAGUE SOUPLE EN ACIER POUR UNE COURROIE D'ENTRAÎNEMENT POUR UNE TRANSMISSION À VARIATION CONTINUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2014 NL 1041102**

(43) Date of publication of application:
**25.10.2017 Bulletin 2017/43**

(73) Proprietor: **Robert Bosch GmbH**
**70442 Stuttgart (DE)**

(72) Inventor: **PENNINGS, Bert**
**5052 CH Goirle (NL)**

(74) Representative: **Plevier, Gabriël Anton Johan Maria**
**Bosch Transmission Technology B.V.**
**IP section (GS-CT/NE)**
**postbus 500**
**5000 AM Tilburg (NL)**

(56) References cited:
**EP-A1- 2 412 836      EP-A1- 2 762 586**
**EP-A2- 1 111 080      WO-A1-2009/134119**
**WO-A1-2011/076397**

## Description

The present invention relates both to a flexible steel ring according to the preamble of claim 1 hereinafter and to a method for producing such a ring. This type of ring is used as a component of a drive belt for a continuously variable transmission for, in particular, automotive use such as in passenger motor cars. The drive belt is typically composed of two sets of mutually concentrically arranged, i.e. nested rings that are inserted in a recess of transverse members of the drive belt. The drive belt comprises a plurality of these transverse members that are arranged in mutual succession along the circumference of such ring sets. In such drive belt application thereof, an individual ring normally has a thickness of only 0.2 mm or less, typically of about 0.185 mm.

In the transmission the drive belt is used for transmitting a driving power between two shafts, whereto the drive belt is passed around two rotatable pulleys, each pulley associated with one such transmission shaft and provided with two conical discs defining a circumferential V-groove of the pulley wherein a circumference section of the drive belt is accommodated. By varying an axial separation between the respective discs of the two pulleys in a coordinated manner, the drive belt's radius at each pulley -and hence the rotational speed ratio between the transmission shafts-can be varied, while maintaining the drive belt in a tensioned state. This transmission and drive belt are generally known in the art and are, for example, described in the European patent publication EP-A-1243812.

It is further generally known in art that the performance of the drive belt is directly linked to not only the combined tensile strength of the ring sets, but to a large extent also the fatigue strength of the individual rings thereof. This is because, during rotation of the drive belt in the transmission, the tension and bending stress in the rings oscillate. In practice, it is universally resorted to special steel compositions, in particular so-called maraging steels, as the basic material for the rings in order to realize the desired performance of the drive belt.

A well-known and commonly applied basic material in this respect is maraging steel that is available in a broad range of alloy compositions that, in addition to iron, include substantial amounts of alloying elements such as nickel, molybdenum and cobalt. During the so-called aging heat treatment of such maraging steel at a temperature exceeding 400 degrees Celsius (deg.C.), typically of around 480 deg.C., at which temperature these latter elements form and grow into precipitates, such as $Ni_3Mo$. Such inter-metallic precipitates significantly increase the hardness and toughness of the maraging steel, i.e. of the rings, as expressed by the yield strength thereof. A minimum required core hardness value after such aging process is 500 HV1.0 and preferably the core hardness has a value in the range from 550 to 575 HV1.0.

Additionally, the maraging steel rings are subjected to the heat treatment of nitriding, in which process ammonia gas is dissociated into hydrogen gas and nitrogen atoms that are absorbed from a process gas into the metal lattice through the outer surface of rings, typically also at a temperature of around 480 deg.C. By such absorbed nitrogen, the rings are provided with a compressively (pre-)stressed surface layer that greatly enhances the wear resistance and fatigue strength of the rings, as is required for/in the drive belt applicant thereof. By such nitriding process it is typically aimed for a nitrided surface layer having a layer thickness in the range from 25 to 35 micron.

In the art, the desire exists to combine these two heat treatments of aging and nitriding into a single process step of so-called dualling. This desire is based on process efficiency considerations, namely to reduce overall processing time, handling effort, as well as maximizing the utilization of floor space, equipment and investments. This dualling process is mentioned in WO2011/076397 (A1) in relation to the flexible steel ring component of the drive belt and is described in more detail in EP1753889 (A1) and later in WO2012/083975 (A1).

Although the process step of dualling, i.e. of simultaneous aging and nitriding, of flexible steel rings is thus known in the art and, indeed, is successfully applied in practice, severe limitations exist in relation thereto. It has appeared that, in order to realize a required core hardness in combination with a required nitrided surface layer thickness of the rings, generally only a very narrow window is available for suitable process settings for the dualling process, in particular in terms of the temperature and the composition of the process gas composition in the oven chamber and of the duration of the heat treatment. Furthermore, such narrow window of suitable process settings was found to change considerably in relation to the specific composition of the maraging steel basic material, even to the extent that previously allowed tolerances on the alloying composition of the maraging steel basic material have to be narrowed specifically for the dualling process. In certain cases, i.e. for certain maraging steel alloying compositions applied in drive belts, in particular those compositions that age relatively slowly and that thus require a relatively long process time to reach the required core hardness, no suitable process settings seem to be available at all. In these cases, the nitrided surface layer simply becomes too thick and the rings become too brittle in the time that it takes to reach the required core hardness by aging, i.e. for the precipitate formation process to complete.

It is an object of the present disclosure to mitigate the above-described problems. In particular, it is aimed to broaden the allowed tolerances on the alloying composition of the maraging steel basic material.

From the European patent applications EP-2762586-A1, EP-1111080-A2 and EP-2412836-A1 maraging steel compositions are known that include chromium to improve the fatigue strength of the steel after it has been subjected to the sequential heat treatments of ageing followed by nitriding.

According to the present disclosure, in contrast with sequentially performed aging and nitriding, in the dualling process, nitrogen atoms are introduced into the maraging steel while the said inter-metallic precipitates are incubating and growing. At this stage of the aging or precipitate forming process, atomic molybdenum is thus available. Although such atomic molybdenum is intended to bond with nickel to form the said inter-metallic $Ni_3MO$ precipitates, in the dualling process it can, unintended, bond with nitrogen to form non-metallic MoN and Mo2N precipitates as well, but only near the surface of the ring. As a result of these multiple options for the molybdenum to form bonds with other elements, the material properties of the nitrided surface layer were found to vary considerably in relation to not only the process settings of the dualling process, but also in relation to characteristics of the surface of the individual rings such as surface roughness. This makes the control of the dualling process very (in some cases even impractically) sensitive, in particular in mass manufacture.

According to the present disclosure and in addition to adding chromium to the alloying composition of the maraging steel the dualling process is carried out at a temperature in the range between 515 to 525 deg.C. for 55 to 75 minutes and while keeping the ammonia content of the process gas atmosphere between 1 and 5 vol.-%. At such high temperature the chromium in the maraging steel alloy compositions reacts, i.e. bonds with the nitrogen to form chromium nitrides, i.e. CrN precipitates near the surface of the ring (where nitrogen is present through diffusion from the ring surface). As a result the molybdenum remains much more available for its intended purpose of forming the said inter-metallic $Ni_3Mo$ precipitates also near the surface of the ring. Advantageously, in this manner the hardness value resulting from the aging process, i.e. from the inter-metallic precipitation formation, becomes much more consistent and -thus- far better controllable by the process settings of the dualling process.

Furthermore, by the presence of chromium in the maraging steel alloy the formation of the known, so-called, compound layer consisting of iron nitrides, such as $Fe_xN_y$, at the surface of the flexible steel ring is advantageously suppressed. Such a compound layer is known to be detrimental to the mechanical properties of the flexible steel ring, in particular to the fatigue strength thereof. In other words, within the known teaching the presently proposed dualling process, in particular the high process temperature of over 500 deg.C. applied therein, would not be considered because the compound layer is then expected to form. However, by the said presence of chromium, the compound layer will not form, at least not within the presently discussed process window of the dualling process in terms of the process temperature and the ammonia content of the process gas atmosphere.

For obtaining optimum effects and results within the context of the present disclosure, the preferred process settings of the dualling process preferably entail keeping the ammonia content of the process gas atmosphere at less than 3 vol.-%. Preferably, such ammonia content is controlled by controlling the equilibrium constant KN of the nitriding reaction in the gas phase at the surface of the flexible steel ring:

$$2NH_3 \Leftrightarrow 2[N] + 3H_2$$

and

$$KN = (p[NH_3]) / (p[H_2]^{1.5})$$

with

$p[NH_3]$ and $p[H_2]$ representing the partial gas pressure of ammonia ($NH_3$) and of hydrogen ($H_2$) respectively

More preferably, such equilibrium constant KN is controlled to a value within the range from 1 to 3 $bar^{-1/2}$.

Furthermore, the most suitable maraging steels within the context of the present disclosure are taken from the range of alloying compositions containing 17 to 19 mass-% nickel, 4 to 8 mass-% molybdenum, 4 to 14 mass-% cobalt, 0.5 to 2.5 mass-% chromium, 0.4 mass-% titanium or less and up to 2 mass-% aluminum with balance iron and with inevitable contaminations such as oxygen, nitrogen, phosphorous, silicon, etc.

The above-described basic features of the present disclosure will now be elucidated by way of example with reference to the accompanying figures, whereof:

figure 1 is a schematic illustration of a known drive belt and of a transmission incorporating such known belt;
figure 2 is a schematic illustration of a part of the known drive belt, which includes two sets of a number of flexible steel rings, as well as a plurality of transverse members;
figure 3 diagrammatically represents a known manufacturing method of the ring that includes a process step of nitriding; and
figure 4 diagrammatically represents a heat treatment process of dualling in accordance with the present disclosure.

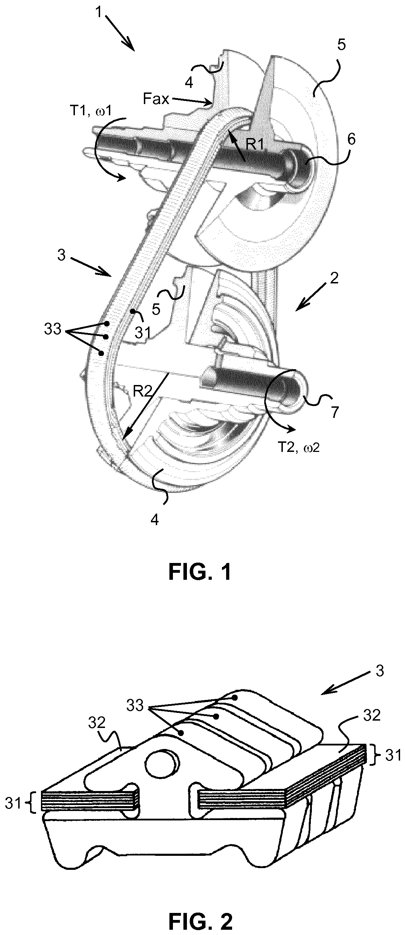

Figure 1 shows schematically a continuously variable transmission (CVT) with a drive belt 3 wrapped around two pulleys 1 and 2. Each pulley 1, 2 is provided with two conical pulley discs 4, 5, where between an annular, predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement ω1 and an accompanying torque T1 from the one pulley 1 to the other one pulley 2 (rotational movement ω2 and accompanying torque T2) and vice versa. Each pulley 1, 2 generally also comprises activation means that can impose on the said at least one disc 4 thereof an axially oriented clamping force directed towards the respective other pulley disc 5 thereof, such that the belt 3 can be clamped between these discs 4, 5. Also, a (speed) ratio of the CVT between the rotational speed of the driven pulley 2 and the rotational speed of the driving pulley 1 is determined thereby. This CVT is known per se.

An example of a known drive belt 3 is shown in more detail figure 2 in a section thereof. The drive belt 3 is made up of two sets 31 of mutually nested, flat and flexible steel rings 32 and of a plurality of transverse members 33. The transverse members 33 are arranged in mutual succession along the circumference of the ring sets 31, in such manner that they can slide relative to and in the circumference direction of the ring sets 31.

The transverse members 33 take-up the said clamping force, such that friction between the discs 4, 5 and these transverse members 33 causes a rotation of the driving pulley 1 to be transferred to the so-called driven pulley 2 via the likewise rotating drive belt 3 (and vice versa).

During operation in the CVT the drive belt 3 and in particular the rings 32 thereof are subjected to a cyclically varying tensile and bending stresses, i.e. a fatigue load. Typically the resistance against metal fatigue, i.e. the fatigue strength of the rings 32, thus determines the functional life span of the drive belt 3. Together, the properties of the basic material that is used and the process steps that are applied in the manufacturing thereof, determine the fatigue strength of the end-product rings 32.

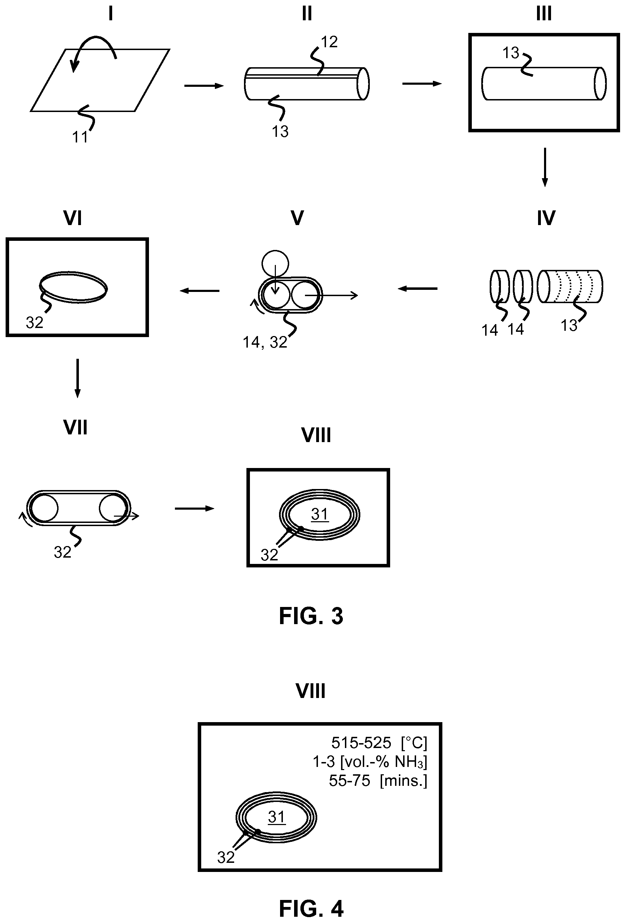

Figure 3 illustrates a relevant part of the known manufacturing method for the drive belt ring set 31, as it is typically applied in the art for the production of metal drive belts 3 for automotive application. The separate process steps of the known manufacturing method are indicated by way of Roman numerals.

In a first process step I a thin sheet or plate 11 of a maraging steel basic material having a thickness of around 0.4 mm is bend into a cylindrical shape and the meeting plate ends 12 are welded together in a second process step II to form a hollow cylinder or tube 13. In a third step III of the process, the tube 13 is annealed. Thereafter, in a fourth process step IV, the tube 13 is cut into a number of annular hoops 14, which are subsequently -process step five V- rolled to reduce the thickness thereof to, typically, around 0.2 mm, while being elongated. After rolling, the hoops 14 are usually referred to as rings 32. Also after rolling the rings 32 are considerably more flexible than before rolling, i.e. as compared to the thicker hoops 14.

The rings 32 are subjected to a further, i.e. ring annealing process step VI for removing the work hardening effect of the previous rolling process step by recovery and re-crystallization of the ring material at high temperature. Thereafter, in a seventh process step VII, the rings 32 are calibrated by being individually mounted around two rotating rollers and being stretched to a predefined circumference length by forcing the said rollers apart. In this seventh process step VII, also internal stresses are imposed on the rings 32.

Thereafter, the rings 32 are heat-treated in an eighth process step VIII of so-called dualling, namely of combined, i.e. simultaneous, ageing or bulk precipitation hardening and nitriding or case hardening, either as a separate component or as (pre-)assembled into ring sets 31 (which latter variant is illustrated in figure 3). More in particular, such combined heat-treatment involves keeping the rings 32 in an oven chamber containing a controlled gas atmosphere or process gas that comprises ammonia, nitrogen and hydrogen gas. In the oven chamber, i.e. in the process gas, some of the ammonia molecules decompose at the surface of the rings 32 into hydrogen gas and nitrogen atoms that can enter into the metal lattice of the rings 32. By these interstitial nitrogen atoms the resistance against wear as well as against fatigue fracture of the rings 32 is known to be increased remarkably. Additionally, inter-metallic precipitates incubate and grow, which precipitates significantly increase the strength and toughness of the rings 32.

Typically, in this eighth process step VIII of dualling, it is aimed to provide the rings 32 with a core hardness of at least 525 HV1.0 and with a nitrided surface layer or nitrogen diffusion zone with a layer thickness of at least 25 micron up to 35 micron at most, at least for rings 32 having a thickness of 0.18 to 0.19 mm.

In practice it was found that such dualling process (step VIII) is difficult to control, at least with sufficient accuracy and stability in terms of the material properties of the end-product flexible metal ring 32. For example such resulting material properties can vary considerably in relation to variations in the maraging steel alloy composition of the basic material 11, as well as in relation to the actual process settings of the dualling process (step VIII). In view of these limitations of the known dualling process (step VIII), applicant set out to analyze the relevant influence factors with an aim to realize a less sensitive, more robust and broadly applicable dualling process.

According to the present disclosure and as illustrated in figure 4, such a more robust and broadly applicable dualling process is found in applying a process temperature therein that has previously not been considered. In particular, it is proposed to apply a process temperature in excess of 500 deg.C. In the illustrated example, the process temperature is in the range between 515 and 525 deg.C, a process gas ammonia content is in the range between 1 and 3 vol.-% and a process duration is in the range between 55 and 75 minutes.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

**Claims**

1. Method for the simultaneous aging and gas nitriding of an endless, flexible ring (32) made from maraging steel for use in or as a drive belt (3) for a continuous variable transmission, **characterized in that** the maraging steel of the flexible ring (32) consists of 17 to 19 mass-% nickel, 4 to 8 mass-% molybdenum, 4 to 14 mass-% cobalt, 0.5 to 2.5 mass-% chromium, 0.4 mass-% titanium or less and up to 2 mass-% aluminum with balance iron and with inevitable contaminations and **in that** the simultaneous aging and gas nitriding is carried out at a temperature in the range between 515 and 525 degrees Celsius for 55 to 75 minutes and in a gas atmosphere comprising 1 to 5 volume-% ammonia.

2. The method for the simultaneous aging and gas nitriding of an endless, flexible ring (32) according to a preceding claim, **characterized in that** the simultaneous aging and gas nitriding is carried out in a gas atmosphere comprising less than 3 volume-% ammonia.

3. The method for the simultaneous aging and gas nitriding of an endless, flexible ring (32) according to a preceding claim, **characterized in that** the flexible ring (32) has a thickness in the range from 0.18 to 0.20 millimeter and is provided therein with a core hardness in the range from 500 to 575 HV1.0 and with a nitrided surface layer wherein chromium nitride precipitates are present with a thickness in the range from 25 to 35 micron.

**Patentansprüche**

1. Verfahren zum gleichzeitigen Altern und Gasnitrieren eines aus Maraging-Stahl hergestellten flexiblen Endlosrings (32) zur Verwendung in einem oder als ein Treibriemen (3) für ein stufenloses Getriebe, **dadurch gekennzeichnet, dass** der Maraging-Stahl des flexiblen Rings (32) aus 17 bis 19 Massen-% Nickel, 4 bis 8 Massen-% Molybdän, 4 bis 14 Massen-% Kobalt, 0,5 bis 2,5 Massen-% Chrom, 0,4 Massen-% Titan oder weniger und bis zu 2 Massen-% Aluminium, mit Rest Eisen, und mit unvermeidbaren Verunreinigungen besteht und dass das gleichzeitige Altern und Gasnitrieren 55 bis 75 Minuten lang bei einer Temperatur im Bereich zwischen 515 und 525 Grad Celsius und einer Gasatmosphäre, die 1 bis 5 Volumen-% Ammoniak umfasst, durchgeführt wird.

2. Verfahren für das gleichzeitige Altern und Gasnitrieren eines flexiblen Endlosrings (32) nach einem vorhergehenden Anspruch, **dadurch gekennzeichnet, dass** das gleichzeitige Altern und Gasnitrieren in einer Gasatmosphäre, die weniger als 3 Volumen-% Ammoniak umfasst, durchgeführt wird.

3. Verfahren zum gleichzeitigen Altern und Gasnitrieren eines flexiblen Endlosrings (32) nach einem vorhergehenden Anspruch, **dadurch gekennzeichnet, dass** der flexible Ring (32) eine Dicke im Bereich von 0,18 bis 0,20 Millimeter aufweist und darin mit einer Kernhärte im Bereich von 500 bis 575 HV1,0 und mit einer nitrierten Oberflächenschicht, in der Chromnitridausfällungen mit einer Dicke im Bereich von 25 bis 35 Mikrometer vorhanden sind, versehen ist.

**Revendications**

1. Procédé pour le vieillissement et la nitruration gazeuse simultanés d'une bague flexible sans fin (32) fabriquée en acier maraging pour l'utilisation dans une, ou en tant que, courroie d'entraînement (3) pour une transmission à variation continue, **caractérisé en ce que** l'acier maraging de la bague flexible (32) est constitué de 17 à 19 % en masse de nickel, de 4 à 8 % en masse de molybdène, de 4 à 14 % en masse de cobalt, de 0,5 à 2,5 % en masse de chrome, de 0,4 % en masse de titane ou moins et de jusqu'à 2 % en masse d'aluminium, le reste étant du fer et des contaminants inévitables et **en ce que** le vieillissement et la nitruration gazeuse simultanés sont effectués à une température dans une plage comprise entre 515 et 525°C pendant 55 à 75 minutes et dans une atmosphère gazeuse comprenant 1 à 5 % en volume d'ammoniac.

2. Procédé pour le vieillissement et la nitruration gazeuse simultanés d'une bague flexible sans fin (32) selon la revendications précédente, **caractérisé en ce que** le vieillissement et la nitruration gazeuse simultanés sont effectués dans une atmosphère de gaz comprenant moins de 3 % en volume d'ammoniac.

3. Procédé pour le vieillissement et la nitruration gazeuse simultanés d'une bague flexible sans fin (32) selon une revendications précédente, **caractérisé en ce que** la bague flexible (32) a une épaisseur dans une plage de 0,18 à 0,20 mm et est pourvue d'une dureté de cœur dans une plage de 500 à 575 HV1.0 et d'une couche de surface nitrurée, des précipités de nitrure de chrome étant présents, dans une épaisseur de l'ordre de 25 à 35 microns.

**FIG. 1**

**FIG. 2**

**FIG. 3**

515-525 [°C]
1-3 [vol.-% NH₃]
55-75 [mins.]

**FIG. 4**

**EP 3 234 211 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1243812 A
- WO 2011076397 A1
- EP 1753889 A1
- WO 2012083975 A1
- EP 2762586 A1
- EP 1111080 A2
- EP 2412836 A1